# EUROPÄISCHE PATENTSCHRIFT

(11) **EP 1 084 414 B1**
(45) Veröffentlichungstag und Bekanntmachung des Hinweises auf die Patenterteilung: **03.11.2004**
(21) Anmeldenummer: 99922089.0
(22) Anmeldetag: 08.04.1999
(51) Int. Cl.: G01P 21/02, G01B 7/14

(54) **VERFAHREN UND VORRICHTUNG ZUR KONTROLLE DES EINBAULUFTSPALTES EINES AKTIVEN SENSORS**
METHOD AND DEVICE FOR CHECKING THE INSTALLATION AIR GAP OF AN ACTIVE SENSOR
PROCEDE ET DISPOSITIF PERMETTANT DE CONTROLER L'ENTREFER D'INSTALLATION D'UN DETECTEUR ACTIF

(30) Priorität: 14.04.1998 DE 19816180; 23.03.1999 DE 19912877
(43) Veröffentlichungstag der Anmeldung: 21.03.2001
(73) Patentinhaber: Continental Teves AG & Co. OHG, 60488 Frankfurt am Main (DE); HDT Industrieplanung GmbH, 64291 Darmstadt (DE)
(72) Erfinder: LOHBERG, Peter, D-61381 Friedrichsdorf (DE); HILDEBRANDT, Klaus, D-64291 Darmstadt (DE)
(86) Internationale Anmeldenummer: PCT/EP1999/002364
(87) Internationale Veröffentlichungsnummer: WO 1999/053327

(56) Entgegenhaltungen:
- EP-A- 0 569 924
- DE-A- 4 434 978
- US-A- 5 714 879

## Beschreibung

Die Erfindung betrifft ein Verfahren sowie eine Vorrichtung zur Kontrolle oder zum Feststellen des Einbauluftspaltes zwischen einem aktiven Sensor und einem Encoder, wobei die maximale Größe des Luftspaltes (Grenzluftspalt), bei der ein störungsfreier Betrieb des Sensors noch gewährleistet ist, mindestens innerhalb eines Bereiches der Versorgungsspannung des Sensors von deren Höhe abhängig ist.

Sensoren dieser Art finden insbesondere als Bewegungssensoren wie zum Beispiel zur Erfassung des Drehverhaltens eines Fahrzeugrades (Raddrehzahlsensoren) bei schlupfgeregelten Bremsen bzw. Antiblockiersystemen Anwendung. Die Drehbewegung wird dabei von einem in einem Encoder vorhandenen Polrad ausgeführt, durch das ein sich drehendes Magnetfeld erzeugt wird. Dieses Magnetfeld wird von dem Sensor erfaßt, dessen Meßwertaufnehmer z. B. eine magnetoresistive Brücke (AMR-Brücke) ist, die auf die Magnetfeldänderungen anspricht.

Um eine störungsfreie Übertragung der Bewegungen von dem Encoder zu dem Sensor zu gewährleisten, muß sichergestellt sein, daß der Luftspalt niemals den Grenzluftspalt übersteigt. Darüber hinaus muß eine gewisse Mindestdifferenz zwischen dem tatsächlichen Luftspalt und dem Grenzluftspalt vorhanden sein, um zu gewährleisten, daß durch Bauelement-Toleranzen, Temperaturschwankungen und dynamische Verformungen oder eine gewisse Schwankung der Versorgungsspannung des Sensors der Grenzluftspalt auch vorübergehend nicht überschritten wird. Zur Kompensation der durch diese Schwankungen bewirkten Veränderungen des Luftspaltes weist der Sensor eine Triggerstufe auf, die der magnetoresistiven Brücke nachgeschaltet ist und mit der das Sensor-Ausgangssignal konstant gehalten wird.

Bei dieser Anordnung besteht jedoch das Problem, daß nach einer Montage des Sensors nicht überprüft werden kann, ob der Einbauluftspalt in ausreichendem Maße kleiner ist als der Grenzluftspalt, d.h. ob zwischen beiden eine Sicherheits-Mindestdifferenz besteht. Wenn das Sensor-Ausgangssignal vorhanden ist, bedeutet dies nur, daß der Luftspalt gegenwärtig den Grenzluftspalt nicht übersteigt. Der Luftspalt kann tatsächlich aber bereits so groß sein, daß durch eine ungünstige Kombination der oben genannten Toleranzbedingungen der Grenzluftspalt z.B. vorübergehend doch überschritten wird, so daß die Übertragung zwischen Encoder und Sensor zumindest gestört sein kann.

Eine Messung des tatsächlichen Abstandes über die von dem Sensor empfangenen Signale ist aufgrund der in den Sensor eingebauten Triggerstufe nicht möglich, da diese ein konstantes Sensor-Ausgangssignal erzeugt, solange der Luftspalt den Grenzluftspalt nicht übersteigt.

Der Erfindung liegt deshalb die Aufgabe zugrunde, nach einer Möglichkeit zu suchen, mit der bei einem Sensor der eingangs genannten Art der tatsächliche Einbauluftspalt und insbesondere die Differenz zwischen diesem und dem Grenzluftspalt kontrolliert oder festgestellt werden kann.

Gelöst wird diese Aufgabe mit einem Verfahren der eingangs genannten Art, das sich auszeichnet durch folgende Verfahrensschritte:
- Reduzieren der Versorgungsspannung des Sensors auf mindestens einen Wert, durch den der Grenzluftspalt um jeweils ein gewünschtes Prüfmaß verkleinert wird und
- Vergleichen des mindestens einen Prüfmaßes mit einer gewünschten Differenz zwischen dem Grenzluftspalt und dem vorhandenen Luftspalt durch Erfassen einer Veränderung des Sensor-Ausgangssignals durch das Reduzieren der Versorgungsspannung, sowie Auswerten des Vergleichsergebnisses durch Signalisierung und / oder Abspeicherung.

Die Aufgabe wird ferner mit einer Vorrichtung der eingangs genannten Art gelöst, die sich auszeichnet durch
- eine erste Einrichtung, mit der die versorgungsspannung des Sensors auf mindestens einen Wert reduzierbar ist, durch den der Grenzluftspalt um jeweils ein gewünschtes Prüfmaß verkleinert wird und
- eine zweite Einrichtung zum Vergleichen des mindestens einen Prüfmaßes mit einer gewünschten Differenz zwischen dem Grenzluftspalt und dem tatsächlichen Luftspalt durch Erfassen einer Veränderung des Sensor-Ausgangssignals durch die reduzierte Versorgungsspannung sowie zum Auswerten des Vergleichsergebnisses durch Signalisierung und / oder Abspeicherung.

Die unteransprüche haben vorteilhafte Weiterbildungen des Verfahrens bzw. der Vorrichtung zum Inhalt.

Weitere Einzelheiten, Merkmale und Vorteile der Erfindung ergeben sich aus der folgenden Beschreibung einer bevorzugten Ausführungsform anhand der Zeichnung. Es zeigt:
Fig. 1 eine graphische Darstellung der Abhängigkeit eines Sensor-Ausgangssignals von der Versorgungsspannung des Sensors;
Fig. 2 eine graphische Darstellung der Abhängigkeit des Grenzluftspaltes von der Versorgungsspannung des Sensors;
Fig. 3a, 3b graphische Darstellungen der Sensor-Ausgangsspannung bzw. des Impuls/Pausenverhältnisses in Abhängigkeit von der Größe eines Luftspaltes;
Fig. 4a bis 4e Darstellungen der Veränderung des Grenzluftspaltes bei verschiedenen Versorgungsspannungen des Sensors und
Fig. 5 ein schematisches Blockschaltbild einer Vorrichtung zur Kontrolle und zum Feststellen des Einbauluftspaltes eines aktiven Sensors.

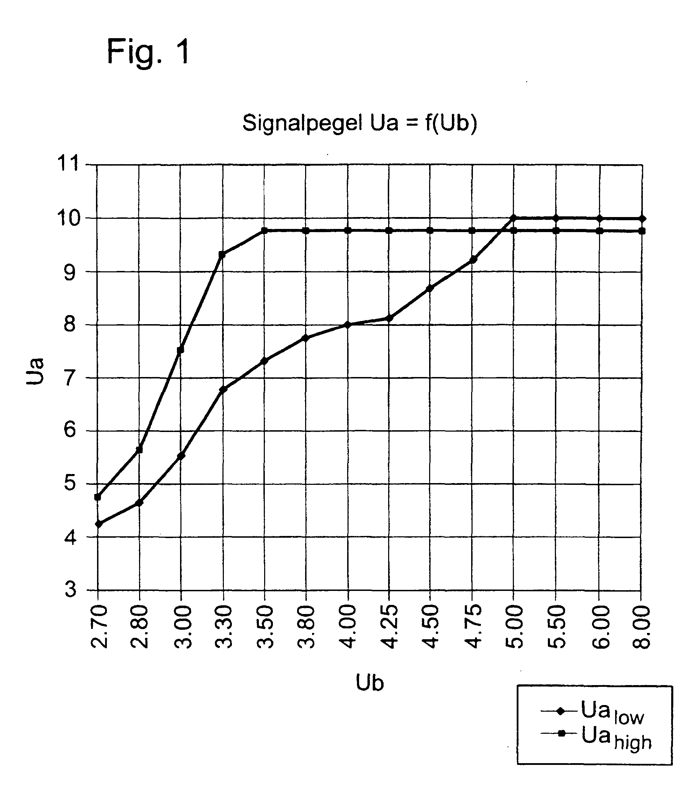

In Figur 1 sind die gemessenen hohen und niedrigen Sensor-Ausgangsspannungen Ua_{high}, Ua_{low} in Abhängigkeit von der Versorgungsspannung Ub für einen aktiven Sensor einer schlupfgeregelten Bremsanlage (ABS) graphisch aufgetragen. Aus dieser Darstellung wird deutlich, daß bei einem Reduzieren der Versorgungsspanung Ub unter einen Nennwert von etwa 5 V das Ausgangssignal abfällt.

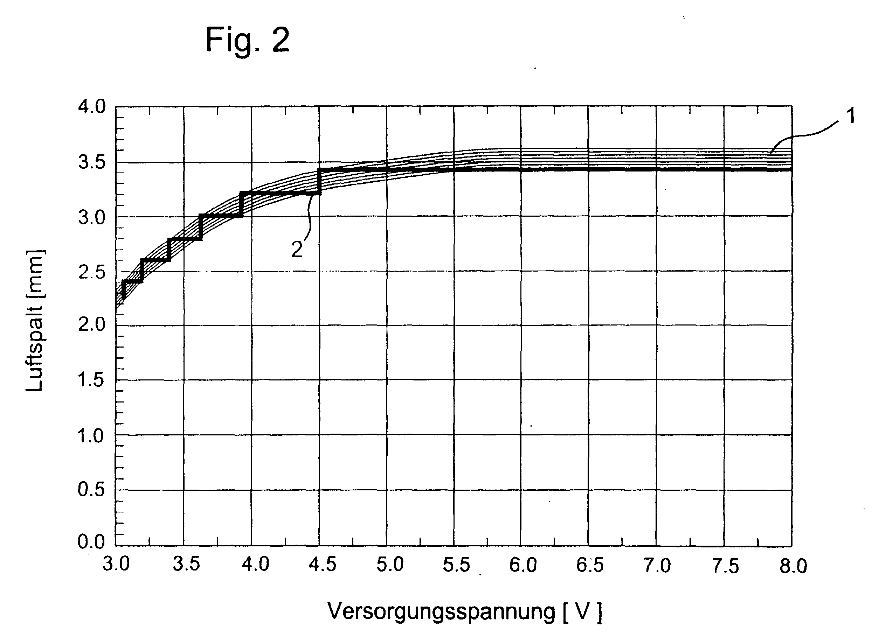

In Figur 2 ist der sich daraus ergebende physikalische Zusammenhang zwischen der Versorgungsspannung eines Sensors und dem maximalen Luftspalt zu einem ein Magnetfeld erzeugenden Impulsrad eines Encoders dargestellt, bei dem gerade noch eine störungsfreie Übertragung möglich ist (Grenzluftspalt). Das Streuband 1 der Kurve repräsentiert dabei die Meßwerte für eine Vielzahl von Sensorelementen in Kombination mit dem gleichen Impulsrad. Das Streuband ermöglicht eine Quantisierung in etwa sechs Unterscheidungsbereiche, die als Stufen 2 eingezeichnet sind. Zur Prüfung und Überwachung des Luftspaltes können eine oder mehrere dieser Stufen verwendet werden, indem die Versorgungsspannung entsprechend herabgesetzt wird.

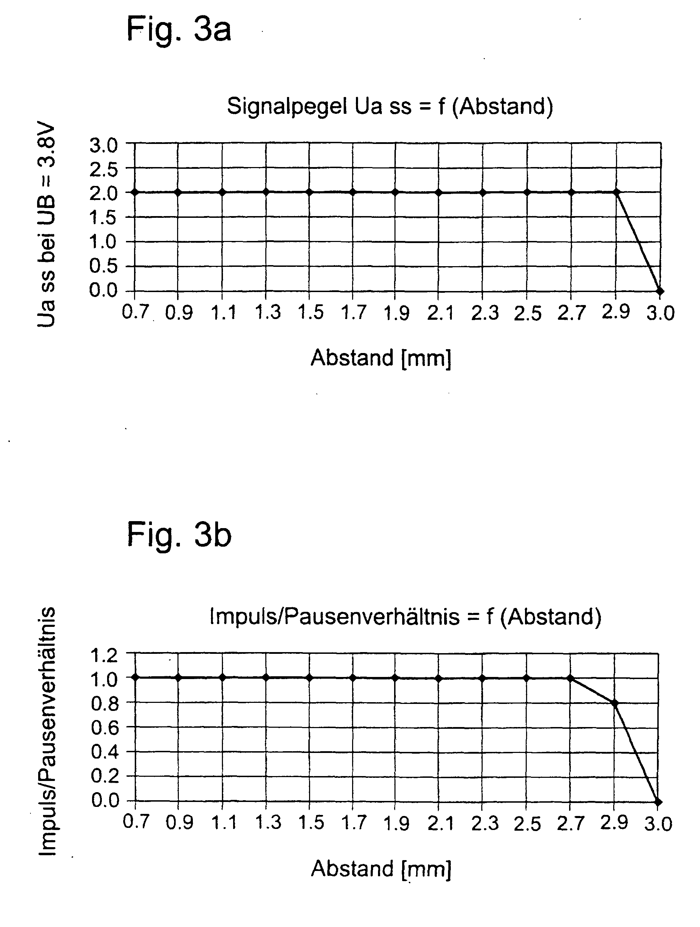

In Figur 3a ist die Sensor-Ausgangsspannung Ua als Funktion der Größe des Luftspaltes bei einer versorgungsspannung des Sensors von 3,8 V aufgetragen. Die Darstellung zeigt, daß die Ausgangsspannung bis zu einem Luftspalt von etwa 2,9 mm konstant bleibt und dann abfällt. Figur 3b zeigt für die gleiche versorgungsspannung den Verlauf des Impuls/Pausenverhältnisses, das ab einem Luftspalt von etwa 2,7 mm abfällt. Aus beiden Darstellungen ergibt sich, daß der Grenzluftspalt bei dieser Versorgungsspannung bei etwa 2,7 mm erreicht ist, da bei größeren Luftspalten ein störungsfreier Betrieb nicht mehr gewährleistet ist.

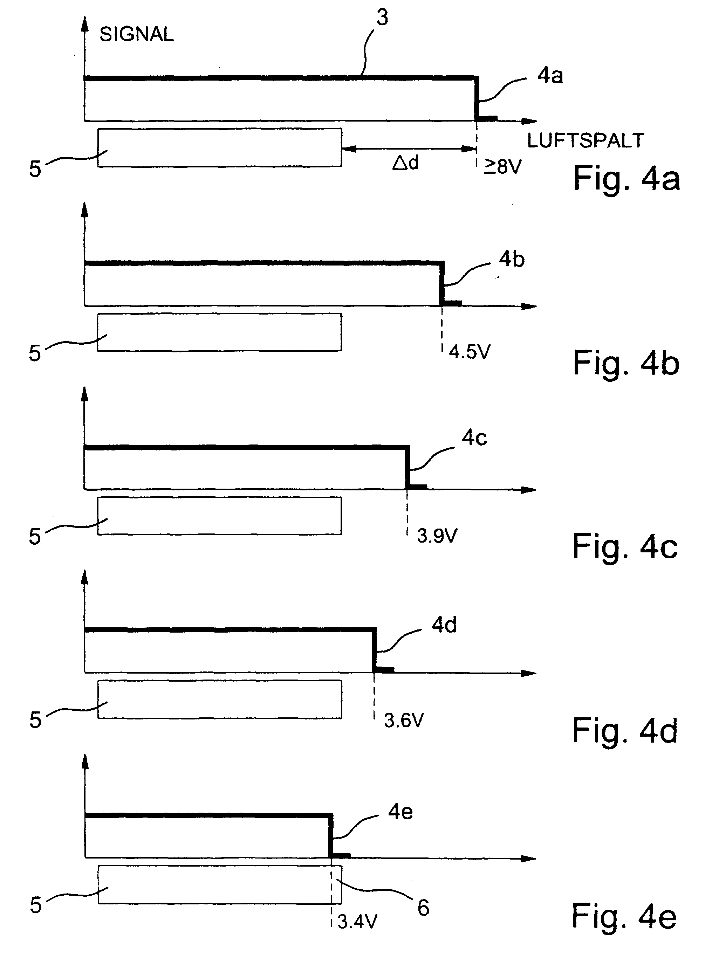

Die Figuren 4a bis 4e zeigen die sich ergebenden Verfügbarkeiten des Sensor-Ausgangssignals 3, aufgetragen über der Länge des Luftspaltes, und damit die virtuelle Verringerung des Grenzluftspaltes 4a, 4b, 4c, 4d, 4e bei abnehmender Versorgungsspannung des Sensors. Außerdem ist in Relation dazu jeweils der Nenntoleranzbereich 5 des Luftspaltes eingezeichnet, der auf Grund von Einbautoleranzen, dynamischen Verformungen, Temperaturschwankungen usw. vorhanden sein muß. Zwischen dem größten, unter diesen Gesichtspunkten anzunehmenden tatsächlichen Luftspalt und dem Grenzluftspalt sollte eine Sicherheits-Mindestdifferenz Dd (Luftspaltreserve) bestehen. Die Größe des Nenntoleranzbereiches korrespondiert im übrigen mit der Nennbetriebsspannung des Sensors, die gemäß Figur 2 mindestens etwa 5 V beträgt.

Im Rahmen der möglichen Quantisierung kann der Grenzluftspalt und damit die Mindestdifferenz Dd schrittweise durch Absenken der versorgungsspannung des Sensors vermindert werden, bis er gemäß Figur 4e den Nenntoleranzbereich unterschreitet. Die in den Figuren 4a bis 4e eingetragenen Betriebsspannungen entsprechend dabei den Quantisierungsschritten gemäß Figur 2, wobei Figur 4 diese Schritte jedoch nicht maßstäblich wiedergibt.

Senkt man die Versorgungsspannung des Sensors bis auf den in Figur 4e gezeigten Wert von 3,4 V ab, so ist es möglich, daß das Sensor-Ausgangssignal aussetzt, wenn der tatsächliche Einbauluftspalt gerade am oberen Ende 6 des Nenntoleranzbereiches 5 liegt, da in diesem Fall der Luftspalt größer ist, als der Grenzluftspalt.

Auf diese Weise kann also überprüft werden, ob sich der tatsächliche Einbauluftspalt im Bereich des Nenntoleranzbereiches 5 bewegt oder schon so groß ist, daß er relativ nahe am Grenzluftspalt liegt. Dies kann zum Beispiel dann der Fall sein, wenn durch einen fehlerhaften Einbau der Nenntoleranzbereich 5 überschritten wurde. Das Sensorsignal würde dann bereits bei einer Absenkung der Versorgungsspannung des Sensors auf einen wert gemäß Figur 4c oder 4d aussetzen.

Durch die quantitative Zuordnung zwischen der Versorgungsspannung und dem Grenzluftspalt, die in Figur 2 dargestellt ist, kann auch ermittelt werden, wie groß der Einbauluftspalt tatsächlich ist, bzw. ob sich die Größe des Einbauluftspaltes um ein gewünschtes Mindestmaß von der Größe des Grenzluftspaltes bei der Nenn-Versorgungsspannung des Sensors unterscheiden. Diese Differenz würde in Abhängigkeit von der vorgesehenen Anwendung des Sensors zum Beispiel im Hinblick auf dynamische Verformungen des Luftspaltes festgelegt werden.

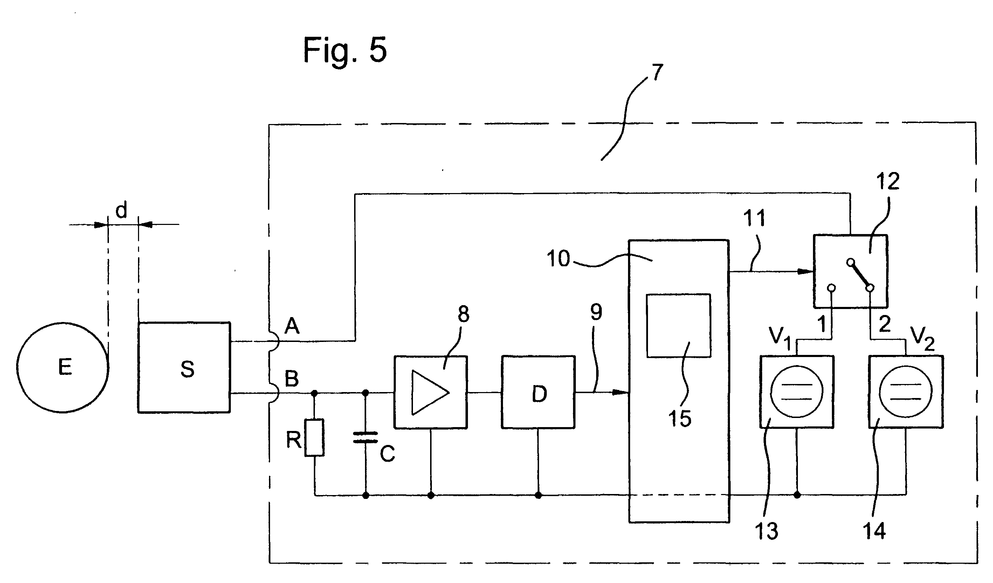

Figur 5 zeigt ein Prinzipschaltbild einer erfindungsgemäßen Vorrichtung 7 zur Kontrolle und zum Feststellen des Einbauluftspaltes eines aktiven Sensors S, der von einem Encoder E beaufschlagt wird. Eine solche Steuereinheit findet insbesondere in einer schlupfgeregelten Bremsanlage zur Überwachung der Einbaulage des Sensors für die Raddrehzahl Anwendung.

Der Encoder E beinhaltet im allgemeinen ein Polrad (Impulsrad), durch dessen Drehung ein Magnetfeld mit wechselnder Polarität erzeugt wird. Zur Erfassung der Magnetfeldänderungen weist der Sensor S zum Beispiel eine magnetoresistive Brücke (AMR-Brücke) mit nachgeschalteter Verstärkeranordnung und Triggerstufe auf, deren Ausgangssignale in zwei geregelte Konstantströme mit entsprechend der Drehung des Polrades wechselnder Polarität umgesetzt werden. Die sensorsinterne Triggerstufe bewirkt, daß das Sensor-Ausgangssignal zumindest so lange luftspaltunabhängig konstant bleibt, wie die Versorgungsspannung des Sensors innerhalb des Nennspannungsbereiches liegt und der Luftspalt d den maximalen Grenzwert (Grenzluftspalt) nicht überschreitet.

Die magnetische Empfindlichkeit der magnetoresistiven Brükke ist bei einem solchen Sensor von der Brücken-Versorgungsspannung abhängig. Bei einer bekannten Sensorelementfamilie reagiert die Brücke zum Beispiel mit etwa 2 mV pro 1 V Betriebsspannung auf Magnetfeldänderungen von 1kA/m. Innerhalb des spezifizierten Versorgungsspannungsbereiches des Sensors wird die Brückenspannung intern auf einem Wert von 5 V konstant gehalten, so daß die Empfindlichkeit ebenfalls konstant bleibt.

Die Schaltung 7 umfaßt im einzelnen einen Ausgang A, an dem die Versorgungsspannung für den Sensor S anliegt, sowie einen Eingang B, über den die Sensor-Ausgangssignale zugeführt werden. Mit dem Eingang B ist ein RC-Glied sowie ein Eingangsverstärker 8 verbunden. Daran schließt sich ein Sequenzkomparator D an, der über eine Statusleitung 9 mit einer Rechnereinheit 10 mit Diagnosespeicher. 15 verbunden ist. Mit einem Ausgang der Rechnereinheit 10 ist über eine Steuerleitung 11 ein Steuereingang eines Umschalters 12 verbunden. An einem ersten Eingang des Umschalters 12 liegt eine erste Spannungsquelle 13, an einem zweiten Eingang eine zweite Spannungsquelle 14 an. Der Ausgang des Umschalters 12 ist mit dem Ausgang A der Schaltung 7 verbunden.

Der am Eingang B der Schaltung 7 anliegende Strom erzeugt an dem Widerstand R einen Spannungsabfall, der dem Eingang des Verstärkers 8 zugeführt wird. Mit dem Sequenzkomparator D wird das verstärkte Eingangssignal auf Signalaussetzer überwacht, indem zum Beispiel das Tastverhältnis durch Auszählen und Vergleichen der Anteile mit hohem und niedrigen Pegel ausgewertet wird. Der Sequenzkomparator D erzeugt ein erstes Statussignal, wenn das Tastverhältnis einem störungsfreien Betrieb entspricht läßt und ein zweites Statussignal, wenn sich das Tastverhältnis aufgrund von Signalaussetzern ändert. Die Statussignale werden der Rechnereinheit 10 zu Diagnosezwecken zugeführt und gegebenenfalls in dem Diagnosespeicher 15 abgespeichert.

Wenn im Zuge einer Wartung oder nach einem Einbau des Sensors dessen Einbaulage kontrolliert werden soll, kann durch eine externes Signal, das der Rechnereinheit 10 zugeführt wird, eine Überwachungsroutine gestartet werden. Dabei wird dem Sensor zunächst die im Nennspannungsbereich liegende Versorgungsspannung VI der ersten Spannungsquelle 13 zugeführt, indem der Umschalter 12 über die Steuerleitung 11 entsprechend angesteuert wird.

Wenn sich der Encoder E dreht und ein Sensorsignal vorhanden ist, übermittelt der Sequenzkomparator D das erstes Statussignal an die Rechnereinheit 10. Durch Erzeugung des Schaltsignals auf der Steuerleitung 11 wird dann der Umschalter 12 betätigt, so daß die von der zweiten Spannungsquelle 14 erzeugte zweite Versorgungsspannung V2 an den Sensor S angelegt wird. Die zweite Versorgungsspannung V2 kann in Abhängigkeit davon, mit welcher Genauigkeit die Einbaulage überprüft werden soll, auf einen oder mehrere der in den Figuren 4b bis 4e gezeigten Werte eingestellt werden. Insbesondere kann durch stufenweises Absenken der zweiten Versorgungsspannung V2 festgestellt werden, wie groß die Differenz Dd zwischen dem vorhandenen Luftspalt und dem Grenzluftspalt bei der Nenn-Versorgungsspannung ist und ob diese Differenz einen gewünschten Sicherheits-Mindestwert aufweist.

Wenn zum Beispiel das Sensorssignal bereits bei einer zweiten Versorgungsspannung V2 von 3,9 V nicht mehr vorhanden ist, so bedeutet dies unter Zugrundelegung der Meßwerte gemäß Figur 2, daß die Differenz weniger als 0,5 mm beträgt. Der Abstand des Sensors S von Encoder E sollte somit verringert werden, um das Risiko von Ausfällen bei dynamischen Verformungen oder Temperaturschwankungen o.ä. zu vermindern.

Wenn andererseits das Sensorsignal auch bei Anliegen einer zweiten Versorgungsspannung V2 von 3,4 V (Figur 4e) noch vorhanden ist, bedeutet dies, daß sich die Einbaulage des Sensors innerhalb des Nenntoleranzbereiches 5 befindet und darüberhinaus auch einen gewissen Mindestabstand von dessen oberem Ende aufweist. Die Einbaulage des Sensors dürfte in diesem Fall optimal sein.

Die zweite Versorgungsspannung V2 kann vorzugsweise programmgesteuert mit einem D/A-Wandler erzeugt bzw. eingestellt werden.

Die Meßergebnisse können zur Protokollierung in dem Diagnosespeicher 15 abgelegt werden. Insbesondere können auch die Zusammenhänge zwischen der Verkleinerung des Grenzluftspaltes und der Versorgungsspannung gemäß der Darstellung in Figur 2 für eine Mehrzahl von spezifischen Sensor/Impulsrad-Kombinationen zum Beispiel an der Vorder- und Hinterachse eines Fahrzeugs für eine repräsentative Anzahl von verschiedenen Kombinationen ermittelt und als Kenngrößen in dem Diagnosespeicher 15 abgespeichert werden.

## Patentansprüche

1. Verfahren zur Kontrolle oder zum Feststellen des Einbauluftspaltes zwischen einem aktiven Sensor und einem Encoder, wobei die maximale Größe des Luftspaltes (Grenzluftspalt), bei der ein störungsfreier Betrieb des Sensors noch gewährleistet ist, mindestens innerhalb eines Bereiches der Versorgungsspannung des Sensors von deren Höhe abhängig ist,
**gekennzeichnet durch** folgende Verfahrensschritte:
- Reduzieren der Versorgungsspannung des Sensors auf mindestens einen Wert, **durch** den der Grenzluftspalt um jeweils ein gewünschtes Prüfmaß verkleinert wird und
- Vergleichen des mindestens einen Prüfmaßes mit einer gewünschten Differenz zwischen dem Grenzluftspalt und dem vorhandenen Luftspalt **durch** Erfassen einer veränderung des Sensor-Ausgangssignals **durch** das Reduzieren der Versorgungsspannung, sowie Auswerten des Vergleichsergebnisses **durch** Signalisierung und / oder Abspeicherung.

2. Verfahren nach Anspruch 1,
**dadurch gekennzeichnet, daß** die dem Sensor zugeführte Versorgungsspannung schrittweise auf eine Mehrzahl von Werten reduziert wird, die jeweils einer Verkleinerung des Grenzluftspaltes um ein vorbestimmtes Prüfmaß entsprechen, bis ein störungsfreier Betrieb des Sensors zumindest vorübergehend nicht mehr möglich ist und daß dann eine Signalisierung erzeugt und/oder abgespeichert wird.

3. Verfahren nach Anspruch 1,
**dadurch gekennzeichnet, daß** die dem Sensor zugeführte Versorgungsspannung um einen mit einem vorgebbaren Prüfmaß korrespondierenden Wert abgesenkt und dann festgestellt wird, ob weiterhin ein störungsfreier Betrieb des Sensors gewährleistet ist.

4. Verfahren nach einem der vorhergehenden Ansprüche,
**dadurch gekennzeichnet, daß** es durch eine Programmsteuerung einer schlupfgeregelten Fahrzeugbremsanlage mit bestimmten Zeitabständen automatisch ausgeführt wird.

5. Vorrichtung zur Kontrolle oder zum Feststellen des Einbauluftspaltes zwischen einem aktiven Sensor und einem Encoder, wobei die maximale Größe des Luftspaltes (Grenzluftspalt), bei der ein störungsfreier Betrieb des Sensors noch gewährleistet ist, mindestens in einem Bereich der Versorgungsspannung des Sensors von deren Höhe abhängig ist,
**gekennzeichnet durch**
- eine erste Einrichtung (10, 12, 14), mit der die Versorgungsspannung des Sensors (S) auf mindestens einen Wert reduzierbar ist, **durch** den der Grenzluftspalt um jeweils ein gewünschtes Prüfmaß verkleinert wird und
- eine zweite Einrichtung (D) zum Vergleichen des mindestens einen Prüfmaßes mit einer gewünschten Differenz zwischen dem Grenzluftspalt und dem tatsächlichen Luftspalt (d) **durch** Erfassen einer Veränderung des Sensor-Ausgangssignals **durch** die reduzierte Versorgungsspannung (V2) sowie zum Auswerten des Vergleichsergebnisses **durch** Signalisierung und / oder Abspeicherung.

6. Vorrichtung nach Anspruch 5,
**dadurch gekennzeichnet, daß** der Sensor (S) einen auf eine Magnetfeldänderung reagierenden Meßwertaufnehmer wie eine magnetoresistive Brücke mit nachgeschalteter Verstärker- und Triggerschaltung aufweist und daß mit der ersten Einrichtung die Versorgungsspannung auf einen Wert (V2) reduzierbar ist, bei dem die Empfindlichkeit der Brücke herabgesetzt ist, der Betrieb der Verstärkerschaltung jedoch noch aufrechterhalten wird.

7. Vorrichtung nach Anspruch 5 oder 6,
**dadurch gekennzeichnet, daß** eine erste Spannungsquelle (13) zum Erzeugen einer Nenn-Versorgungsspannung (V1) vorgesehen ist und die erste Einrichtung eine zweite Spannungsquelle (14) zum Erzeugen der reduzierten Versorgungsspannung (V2) sowie einen durch eine Rechnereinheit (10) gesteuerten Umschalter (12) zum alternativen Anlegen der ersten oder zweiten Spannungsquelle an den Sensor (S) aufweist.

8. Vorrichtung nach einem der Ansprüche 5 bis 7,
**dadurch gekennzeichnet, daß** die zweite Einrichtung einen Sequenzkomparator (D) zum Überwachen der Sensor-Ausgangssignale auf Störungen oder Signalaussetzer aufweist.

9. vorrichtung nach einem der Ansprüche 5 bis 8,
**dadurch gekennzeichnet, daß** ein Diagnosespeicher (15) zum Speichern der Vergleichsergebnisse vorgesehen ist.

10. Vorrichtung nach einem der Ansprüche 5 bis 9,
**dadurch gekennzeichnet, daß** sie als Prüfgerät ausgebildet ist, mit dem die Sensoren einer schlupfgeregelten Fahrzeugbremsanlage auf korrekte Einbaulage geprüft werden können.

## Claims

1. Method for checking or determining the installation air slot between an active sensor and an encoder, wherein the maximum size of the air slot (maximum air slot) which still ensures trouble-free operation of the sensor depends on the level of the supply voltage of the sensor at least within a range of said supply voltage,
**characterized by** the following method steps:
- reducing the supply voltage of the sensor to at least one value by which the maximum air slot is each time decreased by a desired test dimension, and
- comparing the at least one test dimension with a desired difference between the maximum air slot and the existing air slot by determining a variation of the sensor output signal by the reduction of the supply voltage, as well as evaluating the comparison result by signalling and/or storing.

2. Method as claimed in claim 1,
**characterized in that** the supply voltage fed to the sensor is stepwise reduced to a multitude of values which correspond each time to a decrease of the maximum air slot by a predetermined test dimension until trouble-free operation of the sensor is at least temporarily no longer possible, and **in that** signalling is then generated and/or stored.

3. Method as claimed in claim 1,
**characterized in that** the supply voltage fed to the sensor is decreased by a value that corresponds to a predefinable test dimension, and it is then determined whether trouble-free operation of the sensor is still ensured.

4. Method as claimed in any one of the preceding claims,
**characterized in that** the method is automatically performed in defined intervals by a program control of a slip-controlled vehicle brake system.

5. Device for checking or determining the installation air slot between an active sensor and an encoder, wherein the maximum size of the air slot (maximum air slot) which still ensures trouble-free operation of the sensor depends on the level of the supply voltage of the sensor at least within a range of said supply voltage,
**characterized by**
- a first means (10, 12, 14) by which the supply voltage of the sensor (S) can be reduced to at least one value by which the maximum air slot is decreased each time by a desired test dimension, and
- a second means (D) for comparing the at least one test dimension with a desired difference between the maximum air slot and the actual air slot (d) by sensing a variation of the sensor output signal caused by the reduced supply voltage (V2) as well as for evaluating the comparison result by signalling and/or storing.

6. Device as claimed in claim 5,
**characterized in that** the sensor (S) includes a pick-up for measuring data that reacts to a change in the magnetic field, such as a magneto-resistive bridge with an amplifier and trigger circuit connected downstream thereof, and **in that** the first means permits reducing the supply voltage to a value (V2) at which the sensitivity of the bridge is reduced, however, the operation of the amplifier circuit is still maintained.

7. Device as claimed in claim 5 or 6,
**characterized in that** there is provision of a first voltage source (13) for generating a nominal supply voltage (VI), and the first means includes a second voltage source (14) for generating the reduced supply voltage (V2) and a commutator (12) controlled by a computer unit (10) for alternatively applying the first or the second voltage source to the sensor (S).

8. Device as claimed in any one of claims 5 to 7,
**characterized in that** the second means includes a sequence comparator (D) for monitoring the sensor output signals with respect to malfunctions or signal interruptions.

9. Device as claimed in any one of claims 5 to 8,
**characterized in that** a diagnosis memory (15) is provided to store the comparison results.

10. Device as claimed in any one of claims 5 to 9,
**characterized in that** the device is configured as a test device by which the sensors of a slip-controlled vehicle brake system can be tested as regards the correct installation position.

## Revendications

1. Procédé pour le contrôle ou pour la détermination de l'entrefer de montage entre un capteur actif et un encodeur, la grandeur maximale de l'entrefer (entrefer limite), avec laquelle un fonctionnement sans perturbation du capteur est encore garanti, étant dépendant au moins à l'intérieur d'une plage de la tension d'alimentation du capteur du niveau de celle-ci,
**caractérisé par** les étapes de procédé suivantes :
- réduction de la tension d'alimentation du capteur jusqu'à au moins une valeur par laquelle l'entrefer limite est réduite de respectivement une cote d'essai souhaitée et
- comparaison de la au moins une cote d'essai avec une différence souhaitée entre l'entrefer limite et l'entrefer présente par l'enregistrement d'une variation du signal de sortie du capteur par la réduction de la tension d'alimentation, et l'analyse du résultat de comparaison par une signalisation et/ou une mémorisation.

2. Procédé selon la revendication 1,
**caractérisé en ce que** la tension d'alimentation amenée au capteur est réduite de façon progressive à une pluralité de valeurs qui correspondent respectivement à une réduction de l'entrefer limite d'une cote d'essai prédéfinie jusqu'à ce qu'un fonctionnement sans perturbation du capteur ne soit plus possible au moins provisoirement et que ensuite une signalisation est générée et/ou mémorisée.

3. Procédé selon la revendication 1,
**caractérisé en ce que** la tension d'alimentation amenée au capteur est abaissée d'une valeur correspondante avec une cote d'essai prédéfinisable et on détermine ensuite si un fonctionnement sans perturbation du capteur est encore garanti.

4. Procédé selon l'une quelconque des revendications précédentes, **caractérisé en ce qu'**il est mis en oeuvre automatiquement par une commande de programme d'un système de freinage de véhicule à régulation de glissement avec certains intervalles de temps.

5. Dispositif pour le contrôle ou pour la détermination de l'entrefer de montage entre un capteur actif et un encodeur, la grandeur maximale de l'entrefer (entrefer limite), avec laquelle un fonctionnement sans perturbation du capteur est encore garanti, est dépendant au moins dans une plage de la tension d'alimentation du capteur du niveau de celle-ci,
**caractérisé par**
- un premier appareil (10, 12, 14), avec lequel la tension d'alimentation du capteur (S) peut être réduite à au moins une valeur, par laquelle l'entrefer limite est réduite de respectivement une cote d'essai souhaitée et
- un second appareil (D) pour la comparaison de la au moins une cote d'essai avec une différence souhaitée entre l'entrefer limite et l'entrefer (d) réelle par l'enregistrement d'une variation du signal de sortie du capteur par la tension d'alimentation (V2) réduite et pour l'analyse du résultat de la comparaison par signalisation et/ou par mémorisation.

6. Dispositif selon la revendication 5,
**caractérisé en ce que** le capteur (S) présente un enregistreur de valeur de mesure réagissant à une variation du champ magnétique comme un pont magnéto-résistif avec circuit amplificateur et circuit déclencheur placés en aval et **en ce que**, avec le premier appareil, la tension d'alimentation peut être réduite jusqu'à une valeur (V2) avec laquelle la sensibilité du pont est réduite, mais le fonctionnement du circuit amplificateur est encore maintenu.

7. Dispositif selon la revendication 5 ou 6,
**caractérisé en qu**'une première source de tension (13) est prévue pour la génération d'une tension d'alimentation nominale (V1) et le premier appareil génère une seconde source de tension (14) pour la génération de la tension d'alimentation (V2) réduite et un inverseur (12) commandé par un calculateur (10) pour l'application en alternance de la première ou de la seconde source de tension sur le capteur (S).

8. Dispositif selon l'une quelconque des revendications 5 à 7,
**caractérisé en ce que** le second appareil présente un comparateur de séquence (D) pour le contrôle des signaux de sortie du capteur au niveau des incidents ou des ratés de signal.

9. Dispositif selon l'une quelconque des revendications 5 à 8,
**caractérisé en ce qu'**une mémoire de diagnostic (15) est prévue pour le stockage des résultats de comparaison.

10. Dispositif selon l'une quelconque des revendications 5 à 9, **caractérisé en qu**'il est conçu comme appareil de contrôle avec lequel les capteurs d'un système de freinage de véhicule régulé par glissement peuvent être contrôlés pour une position de montage correcte.
